(19) Europäisches Patentamt
European Patent Office
Office européen des brevets

(11) EP 3 434 498 B1

(12) EUROPEAN PATENT SPECIFICATION

(45) Date of publication and mention of the grant of the patent:
**03.06.2020 Bulletin 2020/23**

(51) Int Cl.:
***B60C 15/06*** (2006.01) ***B60C 1/00*** (2006.01)

(21) Application number: **18179584.0**

(22) Date of filing: **25.06.2018**

# (54) PNEUMATIC TIRE COMPRISING OUTER APEX

LUFTREIFEN MIT ÄUSSEREM APEX

PNEUMATIQUE COMPRENANT UN APEX EXTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2017 JP 2017146750**

(43) Date of publication of application:
**30.01.2019 Bulletin 2019/05**

(73) Proprietor: **Sumitomo Rubber Industries, Ltd.**
**Kobe-shi, Hyogo 651-0072 (JP)**

(72) Inventor: **HONDA, Shinichiro**
**Kobe-shi, Hyogo 651-0072 (JP)**

(74) Representative: **TBK**
**Bavariaring 4-6**
**80336 München (DE)**

(56) References cited:
**EP-A1- 2 191 982**
**EP-A1- 2 602 124**
**CN-A- 105 694 134**
**JP-A- 2004 203 332**
**JP-A- 2009 149 769**
**JP-A- 2010 285 510**
**JP-A- 2011 140 548**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a pneumatic tire including an outer apex.

### BACKGROUND ART

Structural techniques for producing pneumatic tires having both high durability and light weight are known in which a rubber apex component (outer apex) is disposed axially outward of the bead apex of a tire to reduce concentration of stress at the carcass (e.g., the second bead filler disclosed in Patent Literature 1). These days, however, further improvement in properties including durability is desired.

### CITATION LIST

### PATENT LITERATURE

Patent Literature 1: WO 2012/018106

JP 2004 203332 A describes a tire which has a bead filler arranged outward in the tire radial direction of a pair of left-right ring-shaped bead cores, a carcass layer having one or more of plies of embedding a plurality of parallel cords in covering rubber, a belt layer arranged outward in the tire radial direction of the carcass layer, a tread part arranged outward in the tire radial direction of the belt layer and a pair of sidewall parts arranged on the left and right of the tread part, and the bead filler is composed of a rubber composition blended with a reinforcing filler including at least carbon fiber.

JP 2011 140548 A describes a rubber composition for clinch apexes including silica and carbon fibers having thermal conductivity of 100 W/mK or more.

JP 2010 285510 A describes a rubber composition for a bead apex including a rubber component, carbon black and a coal pitch-based carbon fiber.

CN 105 694 134 A describes a tire bead filler composition, comprising the following components according to parts by weight: 100 parts of rubber main material, 70-100 parts of natural rubber, 10-30 parts of emulsion polymerized butadiene styrene rubber; a compounding agent according to 100 parts by weight of rubber main powder; the compounding agent includes according to weight parts, 1-20 parts of graphite powder, 60-90 parts of carbon black, 5-8 parts of phenolic reinforced resin, 2-5 parts of tackifying resin, 1-5 parts of zinc oxide, 1-3.5 parts of stearic acid, 3-8 parts of environment-friendly aromatic oil TDAE, 1-3 parts of sulfur powder, 0.5-3 parts of a promoter, and 1-3 parts of an aging resistant.

### SUMMARY OF INVENTION

### TECHNICAL PROBLEM

The present invention aims to solve the above problem and provide a pneumatic tire having improved durability while maintaining or improving good handling stability.

### SOLUTION TO PROBLEM

The present invention relates to a pneumatic tire, as defined in claim 1.

The rubber composition preferably contains, per 100 parts by mass of a rubber component therein, 1 to 3 parts by mass of a crosslinkable resin and 0.1 to 0.3 parts by mass of a resin crosslinking-accelerating auxiliary.

The rubber composition preferably contains, per 100 parts by mass of a rubber component therein, 3 to 55 parts by mass of a pitch-based carbon fiber.

The rubber composition preferably contains, per 100 parts by mass of a rubber component therein, 2 to 35 parts by mass of graphite.

The rubber composition preferably contains, per 1 00 parts by mass of a rubber component therein, 40 to 100 parts by mass of carbon black.

### ADVANTAGEOUS EFFECTS OF INVENTION

The present invention provides a pneumatic tire including an outer apex formed from a rubber composition as defined in claim 1.

Such a pneumatic tire has improved durability while maintaining or improving good handling stability.

BRIEF DESCRIPTION OF DRAWINGS

Fig. 1 illustrates an exemplary schematic cross-sectional view including the sidewall portion and the bead portion of a pneumatic tire of the present invention.
Fig. 2 illustrates an exemplary schematic cross-sectional view including the sidewall portion and the bead portion of a pneumatic tire of the present invention.
Fig. 3 illustrates an exemplary schematic cross-sectional view including the sidewall portion and the bead portion of a pneumatic tire of the present invention.

DESCRIPTION OF EMBODIMENTS

The pneumatic tire of the present invention includes an outer apex formed from a rubber composition having a thermal conductivity of 0.60 W/m·K or higher.

Exemplary embodiments of the pneumatic tire of the present invention will be described below with reference to drawings.

The structure of the pneumatic tire of the present invention may be as shown in, for example, Figs. 1 to 3 which illustrate schematic cross-sectional views including the sidewall portion and the bead portion.

Pneumatic tires 1, 9, and 10 each include: a tread rubber (not shown) forming a tread portion; a sidewall rubber 4 forming each of a pair of sidewall portions extending inwardly from each end of the tread rubber in the radial direction of the pneumatic tire 1, 9, or 10; a clinch rubber 3 forming a clinch portion located radially inward of each sidewall portion; and a chafer rubber 2 forming a chafer portion located on the top of a rim. Moreover, a carcass 5 is provided to extend between the bead portions each including the clinch and chafer portions. The carcass 5 is composed of at least one carcass ply having carcass cords arranged therein. The carcass ply extends from the tread portion via the sidewall portion and then turns up around a bead core 7 and a bead apex 6, which extends from the upper end of the bead core 7 toward the sidewall, from the inside to the outside in the axial direction of the pneumatic tire 1, 9, or 10, and finally anchored by the turn-up. The carcass 5 is divided by the turn-up into a main body 51 and a turn-up part 52.

In the pneumatic tire 1 in Fig. 1, an outer apex 8 is provided between the carcass turn-up part 52 and the clinch rubber 3.

In the pneumatic tire 9 in Fig. 2, an outer apex 8 is provided between the carcass turn-up part 52 and the clinch rubber 3 and, further, extending outwardly in the radial direction of the pneumatic tire 9 to be located between the carcass main body 51 and the sidewall rubber 4.

In the pneumatic tire 10 in Fig. 3, an outer apex 8 is provided between the carcass turn-up part 52 and the clinch rubber 3 and, further, extending outwardly in the radial direction of the pneumatic tire 10 to be located between the carcass main body 51 and the sidewall rubber 4. It also extends inwardly in the radial direction of the pneumatic tire to be located between the carcass turn-up part 52 and the chafer rubber 2.

The outer apex in the present invention refers to a tire component located axially outward of a bead apex of a tire as illustrated in the exemplary partial schematic cross-sectional views of tires in Figs. 1 to 3. Specifically, it is a tire component located axially outward of a carcass turn-up part of a tire. More specifically, it is a tire component located between a carcass turn-up part and an outer layer component (e.g. a sidewall rubber, a clinch rubber, a chafer rubber) located on the axially outer side of the sidewall portion or bead portion of a tire. Here, other tire components may be provided between the outer apex and the carcass turn-up part or the outer layer component. The outer apex may be an outermost layer located on the axially outer side of the sidewall portion or bead portion of a tire.

Herein, the term "clinch portion" refers to a tire component which is located in a region from the sidewall portion to the bead portion and covers an area that contacts a rim. The term "chafer portion" refers to a tire component located in at least a part of the bead portion which contacts a rim. Specific examples of these components are illustrated in, for example, Figs. 1 to 3 of the present application and Fig. 1 of JP 2010-163560 A.

As a result of extensive studies, the present inventors have found that the effect of an outer apex in improving properties including durability (e.g. chafer cracking resistance) cannot be sufficiently achieved because the presence of the outer apex increases the rubber gauge and thus makes it difficult to conduct necessary heat from the mold for cure adhesion of the carcass under normal vulcanization conditions, thereby failing to optimize the adhesion reaction. They have also found that even when vulcanization is performed for a long time in order to allow curing of the carcass to sufficiently proceed, the effect of improving properties including durability still cannot be sufficiently achieved as overcure of the rubber surface on the mold side occurs.

In view of these findings, the pneumatic tire of the present invention includes an outer apex formed from a

rubber composition having a high thermal conductivity to compensate for the decrease in heat conducting efficiency due to the increased rubber gauge.

Preferably, the rubber composition in the pneumatic tire of the present invention contains a pitch-based carbon fiber and/or graphite, and the pitch-based carbon fiber and/or graphite in the outer apex is oriented at a predetermined angle.

Thermally conductive fillers having a high aspect ratio such as pitch-based carbon fibers and graphite are anisotropic due to their high aspect ratio. Anisotropic thermal conductivity and anisotropic stiffness can be provided by orienting such a thermally conductive filler during molding.

When the pitch-based carbon fiber and/or graphite in the outer apex is oriented at an angle of -15 to +15° to the tire width direction, the resulting high thermal conductivity in the tire width direction improves heat conduction from the mold, resulting in further improved durability.

The angle is more preferably -10 to +10°, still more preferably -5 to +5°.

The term "oriented" or "orientation" herein means that at least 80% of the pitch-based carbon fiber and/or graphite in the outer apex has an angle within the specified range. The orientation is determined by the method described later in the EXAMPLES section.

The orientation angle of the pitch-based carbon fiber herein refers to the angle of the direction of the longer side of the pitch-based carbon fiber on the principal plane (plane presenting the largest area of the fiber) with respect to the tire width direction. The orientation angle of the graphite herein refers to the angle of the longest direction of the graphite on the principal plane (plane presenting the largest area of the graphite) with respect to the tire width direction.

Also preferably, the rubber composition in the pneumatic tire of the present invention contains, per 100 parts by mass of the rubber component therein, 1 to 3 parts by mass of a crosslinkable resin and 0.1 to 0.3 parts by mass of a resin crosslinking-accelerating auxiliary.

The present inventors found out that amine-based agents used as crosslinking-accelerating auxiliaries for crosslinkable resins, which are responsible for stiffness of outer apexes, tend to migrate to an adjacent ply layer and inhibit the adhesion reaction of the ply layer.

When the added amount is reduced, adhesion durability is improved, but the stiffness of the outer apex is reduced, resulting in lower handling stability. Thus, there has been difficulty in achieving both durability and handling stability.

In this context, when the pitch-based carbon fiber and/or graphite in the outer apex is oriented at an angle of -15 to +15° to the tire circumferential direction, since in this case sufficient stiffness is ensured and good handling stability is obtained, the amount of amine-based agents can be reduced to achieve both higher durability and handling stability.

<Rubber composition>

The rubber composition according to the present invention has a thermal conductivity of 0.60 W/m·K or higher. This improves durability while maintaining or improving good handling stability.

The thermal conductivity is preferably 0.80 W/m·K or higher, more preferably 1.0 W/m·K or higher. Higher thermal conductivity is preferred. There is no critical upper limit, but it may be, for example, 3.0 W/m·K or lower or 2.0 W/m·K or lower.

Herein, the thermal conductivity of the rubber composition is measured as described later in the EXAMPLES section.

The thermal conductivity may be controlled mainly by changing the type, amount, or orientation of the filler used.

Non-limiting examples of rubbers that may be used in the rubber component of the rubber composition according to the present invention include diene rubbers such as isoprene-based rubbers, polybutadiene rubber (BR), styrene-butadiene rubber (SBR), styrene-isoprene-butadiene rubber (SIBR), chloroprene rubber (CR), acrylonitrile butadiene rubber (NBR), ethylene-propylene-diene rubber (EPDM), butyl rubber (IIR), and halogenated butyl rubber (X-IIR) . These rubbers may be used alone, or two or more of these may be used in combination. Isoprene-based rubbers or SBR is preferred in order to better achieve the effects of the present invention.

Examples of the isoprene-based rubbers include natural rubber (NR), polyisoprene rubber (IR), refined NR, modified NR, and modified IR. The NR may be one commonly used in the tire industry such as SIR20, RSS#3, or TSR20. Non-limiting examples of the IR include those commonly used in the tire industry such as IR2200. Examples of the refined NR include deproteinized natural rubber (DPNR) and highly purified natural rubber (UPNR) . Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These rubbers may be used alone, or two or more of these may be used in combination.

The amount of the isoprene-based rubber based on 100% by mass of the rubber component is preferably 20% by mass or more, more preferably 40% by mass or more, still more preferably 60% by mass or more, but is preferably 90% by mass or less, more preferably 80% by mass or less. When the amount is within the above-mentioned range,

the effects of the present invention can be better achieved.

Non-limiting examples of the SBR include emulsion-polymerized styrene-butadiene rubber (E-SBR) and solution-polymerized styrene-butadiene rubber (S-SBR) . These rubbers may be used alone, or two or more of these may be used in combination.

The amount of the SBR based on 100% by mass of the rubber component is preferably 10% by mass or more, more preferably 20% by mass or more, but is preferably 80% by mass or less, more preferably 60% by mass or less, still more preferably 40% by mass or less. When the amount is within the above-mentioned range, the effects of the present invention can be better achieved.

The rubber composition according to the present invention preferably contains a pitch-based carbon fiber and/or graphite as filler. This enhances the thermal conductivity of the rubber composition and thus improves durability while maintaining or improving good handling stability.

The pitch-based carbon fiber is preferably a coal pitch-based carbon fiber to better achieve the effects of the present invention.

The thermal conductivity of the pitch-based carbon fiber (along the fiber axis) is preferably 100 W/m·K or higher, more preferably 120 W/m·K or higher, still more preferably 130 W/m·K or higher, particularly preferably 135 W/m·K or higher. There is no critical upper limit, but it is preferably 1,500 W/m·K or lower, more preferably 1,000 W/m·K or lower, still more preferably 500 W/m·K or lower. When the thermal conductivity is within the above-mentioned range, the effects of the present invention can be better achieved.

Herein, the thermal conductivity of the pitch-based carbon fiber is determined from electric resistivity using the following equation based on the very high correlation between thermal conductivity and electric resistivity of carbon fibers :

$$K = 1272.4/ER - 49.4$$

wherein K represents the thermal conductivity (W/m·K) of the carbon fiber, and ER represents the electric resistivity (μΩm) of the carbon fiber.

The pitch-based carbon fiber preferably has an average fiber diameter of 1 to 80 μm in order to improve dispersion in rubber and thermal conductivity. The lower limit of the average fiber diameter is more preferably 3 μm or more, still more preferably 5 μm or more. The upper limit of the average fiber diameter is more preferably 30 μm or less, still more preferably 20 μm or less.

The pitch-based carbon fiber also preferably has an average fiber length of 0.1 to 30 mm in order to improve dispersion in rubber and thermal conductivity. The lower limit of the average fiber length is more preferably 1 mm or more, still more preferably 4 mm or more. The upper limit of the average fiber length is more preferably 15 mm or less, still more preferably 10 mm or less.

The average fiber diameter and average fiber length may be measured by, for example, electron microscopy.

The pitch-based carbon fiber in the present invention is not particularly limited. For example, it may suitably be a coal pitch-based carbon fiber produced as described in JP H7-331536 A.

Specifically, the coal pitch-based carbon fiber may be produced by making a pitch fiber infusible in a conventional manner, carbonizing and/or graphitizing it at a desired temperature to obtain "a starting carbon fiber", and then putting the starting carbon fiber together with previously graphitized packing coke into a graphite crucible to perform graphitization.

Examples of the pitch fiber (spun pitch) used in the above production method include those produced by spinning of carbonaceous materials (suitably having an optically anisotropic content of 40% or more, preferably 70% or more, still more preferably 90% or more) such as coal tar, coal tar pitch, coal liquids, or other coal-derived materials. The "starting carbon fiber" may be impregnated with a sizing agent such as an epoxy compound or a water-soluble polyamide compound.

The above method may be used to produce a coal pitch-based carbon fiber that has a thermal conductivity along the fiber axis of 100 to 1,500 W/m·K, a tensile elastic modulus of 85 ton/mm$^2$ or more, a compressive strength of 35 kg/mm$^2$ or higher, a stacking thickness (Lc) of graphite crystals of 30 to 50 nm, a ratio of La (the dimension along the layer plane of graphite crystals) to Lc (La/Lc) of 1.5 or more, and a cross-sectional domain size along the fiber axis of 500 nm or smaller. Such a coal pitch-based carbon fiber can be suitably used in the present invention. The tensile elastic modulus, compressive strength, Lc, La, domain size, and optically anisotropic content may be determined as described in the above publication.

Since the coal pitch-based carbon fiber produced by the above method is formed from a liquid crystal (mesophase) or the like whose molecular orientation is limited to one direction, it has a very high degree of crystallinity and thus high elastic modulus and thermal conductivity.

The coal pitch-based carbon fiber in the present invention preferably has a structure in which polycyclic aromatic molecular frameworks are stacked in layers. Examples of commercial products of the coal pitch-based carbon fiber

include "K6371T" available from Mitsubishi Plastics, Inc.

The amount of the pitch-based carbon fiber per 100 parts by mass of the rubber component is preferably 3 parts by mass or more, more preferably 16 parts by mass or more, still more preferably 30 parts by mass or more. When the amount is 3 parts by mass or more, the effects of the present invention can be better achieved. The amount is also preferably 55 parts by mass or less, more preferably 50 parts by mass or less. When the amount is 55 parts by mass or less, it is possible to reduce the problem of adhesion failure caused by the unvulcanized rubber composition having an excessively high viscosity and thus pushing away the carcass during vulcanization. As a result, better durability is obtained.

Herein, the term "graphite" refers to an element mineral (crystal) consisting of carbon, which is also called plumbago or black lead, and encompasses not only naturally occurring graphite but also artificial graphite.

The graphite preferably has a particle size of 0.01 μm or more, more preferably 0.05 μm or more, but preferably 10 μm or less, more preferably 5 μm or less. When the particle size is within the above-mentioned range, the effects of the present invention can be better achieved.

Herein, the particle size of the graphite means the maximum particle size which is defined as the longest length of the graphite determined by transmission electron microscopy (TEM) in which the graphite is projected onto a projection plane while varying the orientation of the graphite with respect to the projection plane. For example, it is the length of the longer diagonal line when the particle has a rhombus shape or the diameter when the particle has a disc shape. The maximum particle size is measured using a transmission electron microscope (TEM).

The graphite preferably has a thickness of 3 nm or more, more preferably 5 nm or more, but preferably 100 nm or less, more preferably 30 nm or less. When the thickness is within the above-mentioned range, the effects of the present invention can be better achieved.

Herein, the thickness of the graphite is measured using a transmission electron microscope (TEM).

The graphite preferably has a nitrogen adsorption specific surface area ($N_2SA$) of 4 $m^2/g$ or more, more preferably 10 $m^2/g$ or more, but preferably 50 $m^2/g$ or less, more preferably 20 $m^2/g$ or less. When the $N_2SA$ is within the above-mentioned range, the effects of the present invention can be better achieved.

Herein, the nitrogen adsorption specific surface area of the graphite is measured in accordance with JIS K 6217-2:2001.

The amount of the graphite per 100 parts by mass of the rubber component is preferably 2 parts by mass or more, more preferably 5 parts by mass or more, still more preferably 10 parts by mass or more, particularly preferably 20 parts by mass or more. When it is 2 parts by mass or more, the effects of the present invention can be better achieved. The amount is also preferably 35 parts by mass or less, more preferably 30 parts by mass or less. When it is 35 parts by mass or less, it is possible to reduce the problem of adhesion failure caused by the unvulcanized rubber composition having an excessively high viscosity and thus pushing away the carcass during vulcanization. As a result, better durability is obtained.

The combined amount of the pitch-based carbon fiber and graphite per 100 parts by mass of the rubber component is preferably 2 parts by mass or more, more preferably 3 parts by mass or more, still more preferably 5 parts by mass or more. When it is 2 parts by mass or more, the effects of the present invention can be better achieved. The combined amount is also preferably 55 parts by mass or less, more preferably 50 parts by mass or less. When it is 55 parts by mass or less, it is possible to reduce the problem of adhesion failure caused by the unvulcanized rubber composition having an excessively high viscosity and thus pushing away the carcass during vulcanization. As a result, better durability is obtained.

The rubber composition according to the present invention preferably contains carbon black as filler in addition to the pitch-based carbon fiber and/or graphite. Such a rubber composition has synergistically improved thermal conductivity, thereby synergistically improving durability while maintaining or improving good handling stability. This effect is obtained presumably because the combined use of a filler having a high aspect ratio, such as a pitch-based carbon fiber or graphite, with carbon black in aggregate form allows the fillers to easily form a three-dimensional network structure so that thermal conduction pathways are effectively formed.

Non-limiting examples of the carbon black include N134, N110, N220, N234, N219, N339, N330, N326, N351, N550, and N762. They may be used alone, or two or more of them may be used in combination.

The carbon black preferably has a nitrogen adsorption specific surface area ($N_2SA$) of 5$m^2/g$ or more, more preferably 50 $m^2/g$ or more. Carbon black having a $N_2SA$ of 5 $m^2/g$ or more tends to provide improved reinforcing properties, thereby resulting in sufficient durability and handling stability. The $N_2SA$ is also preferably 200 $m^2/g$ or less, more preferably 150 $m^2/g$ or less, still more preferably 100 $m^2/g$ or less. Carbon black having a $N_2SA$ of 200 $m^2/g$ or less tends to disperse better, thereby resulting in good durability and handling stability.

The nitrogen adsorption specific surface area of the carbon black is determined in accordance with JIS K6217-2:2001.

The carbon black preferably has a dibutyl phthalate oil absorption (DBP) of 5 mL/100 g or more, more preferably 50 mL/100 g or more. Carbon black having a DBP of 5 mL/100 g or more tends to provide improved reinforcing properties,

thereby resulting in sufficient durability and handling stability. The DBP is also preferably 200 mL/100 g or less, more preferably 150 mL/100 g or less. Carbon black having a DBP of 200 mL/100 g or less tends to provide good durability and handling stability.

The DBP of the carbon black is determined in accordance with JIS K6217-4:2001.

The carbon black may be a product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of the carbon black per 100 parts by mass of the rubber component is preferably 40 parts by mass or more, more preferably 60 parts by mass or more. An amount of 40 parts by mass or more provides sufficient reinforcing properties, thereby resulting in better durability and handling stability. The amount is also preferably 100 parts by mass or less, more preferably 80 parts by mass or less. An amount of not more than 100 parts by mass leads to better durability.

The combined amount of the pitch-based carbon fiber, graphite, and carbon black per 100 parts by mass of the rubber component is preferably 40 parts by mass or more, more preferably 45 parts by mass or more, still more preferably 60 parts by mass or more, particularly preferably 80 parts by mass or more, most preferably 100 parts by mass or more, but is preferably 150 parts by mass or less, more preferably 130 parts by mass or less. When the combined amount is within the above-mentioned range, the effects of the present invention can be better achieved.

The rubber composition according to the present invention preferably contains a crosslinkable resin to further improve durability and handling stability.

Examples of the crosslinkable resin include phenol-based resins and cresol-based resins, with phenol-based resins being preferred. Examples of phenol-based resins include phenol resins produced by reacting phenols with aldehydes such as formaldehyde, acetaldehyde, or furfural, and modified phenol resins obtained by modification with cashew oil, tall oil, linseed oil, various animal and vegetable oils, unsaturated fatty acids, rosin, alkylbenzene resins, aniline, melamine, or other modifiers. Among these, modified phenol resins are preferred, with cashew oil-modified phenol resins being more preferred, because they enhance durability and handling stability.

The cashew oil-modified phenol resin may suitably be a resin represented by the following formula (1):

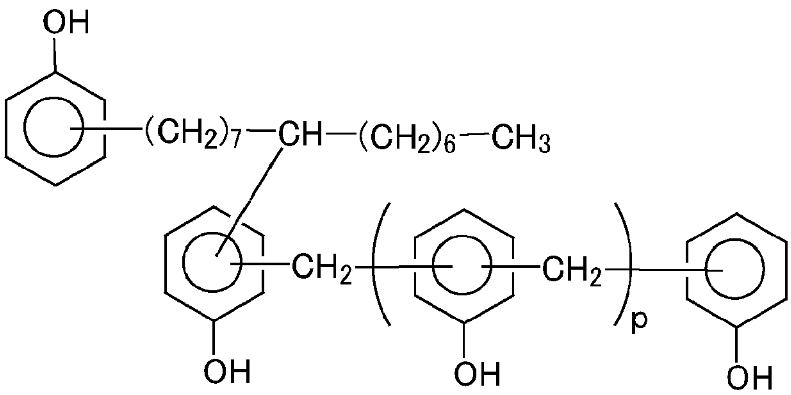

(1)

wherein p is an integer of 1 to 9, preferably 5 or 6, to provide good reactivity and improved dispersibility.

The crosslinkable resin preferably has a softening point of 50°C or higher, more preferably 80°C or higher, but preferably 150°C or lower, more preferably 120°C or lower. A softening point within the above-mentioned range leads to further improved handling stability and durability.

Herein, the softening point is determined in accordance with JIS K 6220:2001 using a ring and ball softening point measuring apparatus and defined as the temperature at which the ball drops down.

The amount of the crosslinkable resin per 100 parts by mass of the rubber component is preferably 0.1 parts by mass or more, more preferably 0.5 parts by mass or more, still more preferably 1 part by mass or more, but is preferably 10 parts by mass or less, more preferably 3 parts by mass or less. An amount of 0.1 parts by mass or more tends to provide good durability and handling stability. An amount of not more than 10 parts by mass tends to lead to good fuel economy.

In the case where the rubber composition according to the present invention contains a crosslinkable resin, it preferably further contains a resin crosslinking-accelerating auxiliary which has a curing effect on the crosslinkable resin. In this case, the effects of the present invention can be better achieved. Any resin crosslinking-accelerating auxiliary having the curing effect may be used. Examples include hexamethylenetetramine (HMT), hexamethoxymethylol melamine (HMMM), hexamethoxymethylol pentamethyl ether (HMMPME), melamine, and methylol melamine. Among these, HMT, HMMM, and HMMPME are preferred because they have an excellent effect in increasing the hardness of crosslinkable resins.

The amount of the resin crosslinking-accelerating auxiliary per 100 parts by mass of the crosslinkable resin is

preferably 0.1 parts by mass or more, more preferably 0.3 parts by mass or more, still more preferably 1 part by mass or more, particularly preferably 5 parts by mass or more. An amount of 0.1 parts by mass or more tends to provide sufficient curing. The amount is preferably 20 parts by mass or less, more preferably 15 parts by mass or less. An amount of not more than 20 parts by mass tends to provide uniform curing and prevent scorching during extrusion.

The amount of the resin crosslinking-accelerating auxiliary per 100 parts by mass of the rubber component is preferably 0.1 parts by mass or more. An amount of 0.1 parts by mass or more tends to provide sufficient curing. The amount is preferably 5 parts by mass or less, more preferably 1 part by mass or less, still more preferably 0.3 parts by mass or less. An amount of not more than 5 parts by mass tends not to cause migration to an adjacent ply layer and inhibition of the adhesion reaction of the ply layer, thereby resulting in good durability.

The rubber composition according to the present invention preferably contains an oil.

The oil may be, for example, a process oil, vegetable fat or oil, or a mixture thereof. Examples of the process oil include paraffinic process oils, aromatic process oils, and naphthenic process oils. Examples of the vegetable fat or oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone, or two or more of these may be used in combination. Among these, process oils, preferably aromatic process oils are preferred in order to well achieve the effects of the present invention.

The amount of the oil per 100 parts by mass of the rubber component is preferably 5 parts by mass or more, more preferably 10 parts by mass or more, but is preferably 30 parts by mass or less, more preferably 20 parts by mass or less. When the amount is within the above-mentioned range, the effects of the present invention tend to be well achieved.

The rubber composition according to the present invention preferably contains zinc oxide.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the rubber component is preferably 0.5 parts by mass or more, more preferably 1 part by mass or more, but is preferably 10 parts by mass or less, more preferably 5 parts by mass or less. When the amount is within the above-mentioned range, the effects of the present invention tend to be better achieved.

The rubber composition according to the present invention preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of the stearic acid per 100 parts by mass of the rubber component is preferably 0.5 parts by mass or more, more preferably 1 part by mass or more, but is preferably 10 parts by mass or less, more preferably 5 parts by mass or less. When the amount is within the above-mentioned range, the effects of the present invention tend to be well achieved.

The rubber composition according to the present invention preferably contains sulfur.

Examples of the sulfur include those commonly used in the rubber industry, such as sulfur powder, precipitated sulfur, colloidal sulfur, insoluble sulfur, highly dispersible sulfur, and soluble sulfur. They may be used alone, or two or more of them may be used in combination.

The sulfur may be a product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the rubber component is preferably 0.5 parts by mass or more, more preferably 1 part by mass or more, but is preferably 10 parts by mass or less, more preferably 5 parts by mass or less, still more preferably 3 parts by mass or less. When the amount is within the above-mentioned range, the effects of the present invention tend to be well achieved.

The rubber composition according to the present invention preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazolylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used alone, or two or more of these may be used in combination. Among these, sulfenamide vulcanization accelerators are preferred in order to more suitably achieve the effects of the present invention.

The amount of the vulcanization accelerator per 100 parts by mass of the rubber component is preferably 1 part by mass or more, but is preferably 10 parts by mass or less, more preferably 7 parts by mass or less. When the amount is within the above-mentioned range, the effects of the present invention tend to be better achieved.

In addition to the above components, the rubber composition according to the present invention may contain additives commonly used in the tire industry. Examples include organic peroxides; additional fillers such as calcium carbonate, talc, alumina, clay, aluminum hydroxide, and mica; and processing aids such as plasticizers and lubricants.

The rubber composition according to the present invention may be prepared, for example, by kneading the components in a rubber kneading machine such as an open roll mill or Banbury mixer, and vulcanizing the kneaded mixture.

(Pneumatic tire)

The pneumatic tire of the present invention may be produced using the rubber composition according to the present invention by common methods. Specifically, an unvulcanized rubber composition containing the components is processed into the shape of an outer apex, assembled with other tire components on a tire building machine in a usual manner to build an unvulcanized tire, and the unvulcanized tire is heated and pressurized in a vulcanizer to produce a tire.

The pneumatic tire of the present invention may preferably be produced by a method in which an extruded unvulcanized rubber composition containing the components is used to form and arrange an outer apex so that the extrusion direction is substantially in parallel with the tire width direction. In an exemplary specific method, an unvulcanized rubber composition prepared by extrusion and rolling at a discharge rate sufficient to orient the thermally conductive filler in the extrusion direction is cut perpendicular to the extrusion direction, and the cut pieces are arranged so that the extrusion direction is substantially in parallel with the tire width direction, and formed into an outer apex. Thus, the thermally conductive filler having a high aspect ratio (e.g. pitch-based carbon fiber and/or graphite) in the outer apex is oriented at an angle of -15 to +15° to the tire width direction.

The pneumatic tire of the present invention may be suitably used as a tire for passenger vehicles, large passenger vehicles, large SUVs, heavy-load vehicles such as trucks and buses, or light trucks.

EXAMPLES

The present invention will be specifically described with reference to examples, but is not limited thereto.

The chemicals used in the examples and comparative examples are listed below.

NR: TSR20
SBR: Nipol 1502 available from Zeon Corporation
Carbon black: N330 ($N_2SA$: 75 $m^2/g$, DBP: 102 mL/100 g) available from Cabot Japan K.K.
Pitch-based carbon fiber: coal pitch-based carbon fiber "K6371T" (chopped fiber, average fiber diameter: 11 μm, average fiber length: 6.3 mm, thermal conductivity: 140 W/m·K) available from Mitsubishi Plastics, Inc.
Graphite: thin layer graphite (particle size: 0.1 to 1 μm, thickness: 10 to 20 nm, carbon content: 97% or more, specific surface area: 15 $m^2/g$ or more)
Resin (crosslinkable resin): PR12686 (cashew oil-modified phenol resin represented by formula (1), softening point: 100°C) available from Sumitomo Bakelite Co., Ltd.
Stearic acid: stearic acid "TSUBAKI" available from NOF Corporation
Zinc oxide: zinc oxide #1 available from Mitsui Mining & Smelting Co., Ltd.
Oil: Diana Process AH-24 (aromatic process oil) available from Idemitsu Kosan Co., Ltd.
Sulfur: M95 (insoluble sulfur) available from Nippon Kanryu Industry Co., Ltd.
Curing agent (resin crosslinking-accelerating auxiliary): NOCCELER H (hexamethylenetetramine) available from Ouchi Shinko Chemical Industrial Co., Ltd.
Vulcanization accelerator: NOCCELER NS (N-t-butyl-2-benzothiazolylsulfenamide) available from Ouchi Shinko Chemical Industrial Co., Ltd.

(Examples and Comparative Examples)

The materials other than the sulfur and vulcanization accelerator in the amounts indicated in Table 1 or Table 2 were kneaded using a Banbury mixer (Kobe Steel, Ltd.) at 150°C for five minutes to give a kneaded mixture. Then, the sulfur and vulcanization accelerator were added to the kneaded mixture, and they were kneaded using an open roll mill at 80°C for five minutes to obtain an unvulcanized rubber composition.

The unvulcanized rubber composition was extruded from the head of a single-screw extruder (Nakata Engineering Co., Ltd., 60 φ) and rolled with a calender roll (diameter: 80 mm, two rolls, gap: 1 mm) under the following conditions: a cylinder temperature of 90°C, a screw temperature of 60°C, a head temperature of 90°C, a die temperature of 90°C, a calender roll temperature of 90°C, and a strip moving speed after passing through the gap between the calender rolls of 600 mm/s or higher.

The rolled, extruded unvulcanized rubber composition was cut perpendicular to the extrusion direction, and the cut pieces were arranged and press-vulcanized at 170°C for 10 minutes to obtain a vulcanized rubber composition.

Moreover, in the reference examples shown in Table 1, the rolled, extruded unvulcanized rubber composition was wound, stacked, and formed into an outer apex, and the outer apex was assembled with other tire components to build an unvulcanized tire, followed by press-vulcanization at 170°C for 10 minutes to prepare a test tire (size: 205/85R16, 117/115L) having a structure as illustrated in Fig. 1.

Moreover, in the examples shown in Table 2, the rolled, extruded unvulcanized rubber composition was cut perpendicular to the extrusion direction, and the cut pieces were arranged so that the extrusion direction was substantially in parallel with the tire width direction, and formed into an outer apex, which was then assembled with other tire components to build an unvulcanized tire, followed by press-vulcanization at 170°C for 10 minutes to prepare a test tire (size: 205/85R16, 117/115L) having a structure as illustrated in Fig. 1.

The vulcanized rubber compositions and test tires prepared as above were evaluated as follows. Tables 1 and 2 show the results.

<Angle range>

The orientation angle of 100 pieces of pitch-based carbon fiber or graphite present in the outer apex of each test tire with respect to the tire circumferential direction or tire width direction was measured using a transmission electron microscope to determine the range of angles at which 80% of the pitch-based carbon fiber or graphite was oriented.

<Thermal conductivity>

The thermal conductivity (W/m·K) of test samples (length 100 mm × width 50 mm × thickness 10 mm, uniform samples with a smooth measurement surface) of the vulcanized rubber compositions was measured in accordance with JIS R 2616 using a thermal conductivity meter (QTM-500, Kyoto Electronics Manufacturing Co., Ltd.) at a measurement temperature of 25°C for a measurement time of 60 seconds.

<Durability>

Each test tire was mounted on a 5.5J rim and then run at 80 km/h under test conditions including an air pressure of 600 kPa and a load of 16.79 kN. The running distance at which damage to the bead portion occurred was measured and expressed as an index (durability index), with Comparative Example 1 set equal to 100. A higher index indicates better durability.

<Handling stability>

A set of the test tires was mounted on a car, and a test driver drove the car. The driver subjectively evaluated handling stability during the driving. The results are expressed as an index (handling stability index), with Comparative Example 1 set equal to 100. A higher index indicates better handling stability.

[Table 1]

| | | Comparative Example | | Reference Example | | | | | | | Comparative Example | Reference Example | | | | | | |
|---|---|---|---|---|---|---|---|---|---|---|---|---|---|---|---|---|---|---|
| | | 1 | 2 | 1 | 2 | 3 | 4 | 5 | 6 | 7 | 3 | 8 | 9 | 10 | 11 | 12 | 13 | 14 |
| Formulation (parts by mass) | NR | 70 | 70 | 70 | 70 | 70 | 70 | 70 | 70 | 70 | 70 | 70 | 70 | 70 | 70 | 70 | 70 | 70 |
| | SBR | 30 | 30 | 30 | 30 | 30 | 30 | 30 | 30 | 30 | 30 | 30 | 30 | 30 | 30 | 30 | 30 | 30 |
| | Carbon black | 70 | 70 | 70 | 70 | 70 | 70 | 70 | 70 | 70 | 70 | 70 | 70 | 70 | 70 | 70 | 70 | 70 |
| | Pitch-based carbon fiber | — | 2.5 | 4 | 10 | 15 | 20 | 20 | 50 | 50 | — | — | — | — | — | — | — | — |
| | Graphite | — | — | — | — | — | — | — | — | — | 1.5 | 2.2 | 3 | 8 | 15 | 15 | 30 | 30 |
| | Resin | 5 | 5 | 5 | 5 | 5 | 5 | 2 | 5 | 1 | 5 | 5 | 5 | 5 | 5 | 2 | 5 | 1 |
| | Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Zinc oxide | 3 | 3 | 3 | 3 | 3 | 3 | 3 | 3 | 3 | 3 | 3 | 3 | 3 | 3 | 3 | 3 | 3 |
| | Oil | 15 | 15 | 15 | 15 | 15 | 15 | 15 | 15 | 15 | 15 | 15 | 15 | 15 | 15 | 15 | 15 | 15 |
| | Sulfur | 2 | 2 | 2 | 2 | 2 | 2 | 2 | 2 | 2 | 2 | 2 | 2 | 2 | 2 | 2 | 2 | 2 |
| | Curing agent | 0.5 | 0.5 | 0.5 | 0.5 | 0.5 | 0.5 | 0.2 | 0.5 | 0.1 | 0.5 | 0.5 | 0.5 | 0.5 | 0.5 | 0.2 | 0.5 | 0.1 |
| | Vulcanization accelerator | 2.1 | 2.1 | 2.1 | 2.1 | 2.1 | 2.1 | 2.1 | 2.1 | 2.1 | 2.1 | 2.1 | 2.1 | 2.1 | 2.1 | 2.1 | 2.1 | 2.1 |
| Range of angles (° ) (to tire circumferential direction) | | — | −15 to +15 | −15 to +15 | −14 to +14 | −11.5 to +11.5 | −9 to +9 | −7 to +7 | −6 to +6 | −5 to +5 | −15 to +15 | −15 to +15 | −14 to +14 | −12 to +12 | −8 to +8 | −6 to −6 | −5 to +5 | −4.5 to +4.5 |
| Thermal conductivity (W/m·K) | | 0.30 | 0.39 | 0.60 | 0.76 | 1.15 | 1.26 | 1.25 | 1.82 | 1.79 | 0.42 | 0.62 | 0.69 | 0.92 | 1.29 | 1.29 | 1.99 | 1.96 |
| Evaluation | Durability index | 100 | 101 | 106 | 110 | 113 | 116 | 121 | 119 | 124 | 101 | 107 | 108 | 111 | 118 | 123 | 125 | 128 |
| | Handling stability index | 100 | 100 | 103 | 106 | 110 | 115 | 114 | 121 | 119 | 100 | 102 | 103 | 106 | 115 | 114 | 128 | 127 |

[Table 2]

| | | Example | | | | | | | | |
|---|---|---|---|---|---|---|---|---|---|---|
| | | 15 | 16 | 17 | 18 | 19 | 20 | 21 | 22 | 23 |
| Formulation (parts by mass) | NR | 70 | 70 | 70 | 70 | 70 | 70 | 70 | 70 | 70 |
| | SBR | 30 | 30 | 30 | 30 | 30 | 30 | 30 | 30 | 30 |
| | Carbon black | 70 | 70 | 70 | 70 | 70 | 70 | 70 | 70 | 70 |
| | Pitch-based carbon fiber | 4 | 10 | 15 | 20 | 50 | — | — | — | — |
| | Graphite | — | — | — | — | — | 3 | 8 | 15 | 30 |
| | Resin | 5 | 5 | 5 | 5 | 5 | 5 | 5 | 5 | 5 |
| | Stearic acid | 1.5 | 1.5 | 1.5 | 1.5 | 1.5 | 1.5 | 1.5 | 1.5 | 1.5 |
| | Zinc oxide | 3 | 3 | 3 | 3 | 3 | 3 | 3 | 3 | 3 |
| | Oil | 15 | 15 | 15 | 15 | 15 | 15 | 15 | 15 | 15 |
| | Sulfur | 2 | 2 | 2 | 2 | 2 | 2 | 2 | 2 | 2 |
| | Curing agent | 0.5 | 0.5 | 0.5 | 0.5 | 0.5 | 0.5 | 0.5 | 0.5 | 0.5 |
| | Vulcanization accelerator | 2.1 | 2.1 | 2.1 | 2.1 | 2.1 | 2.1 | 2.1 | 2.1 | 2.1 |
| Range of angles (° ) (to tire width direction) | | −15 to +15 | −14 to +14 | −11.5 to +11.5 | −9 to +9 | −6 to +6 | −14 to +14 | −12 to +12 | −8 to +8 | −5 to +5 |
| Thermal conductivity (W/m·K) | | 0.60 | 0.76 | 1.15 | 1.26 | 1.82 | 0.69 | 0.92 | 1.29 | 1.99 |
| Evaluation | Durability index | 107 | 111 | 115 | 118 | 120 | 109 | 111 | 116 | 126 |
| | Handling stability index | 100 | 101 | 101 | 102 | 104 | 100 | 101 | 101 | 102 |

The results in Tables 1 and 2 show that the examples including an outer apex formed from a rubber composition having a thermal conductivity of 0.60 W/m·K or higher exhibited improved durability while maintaining or improving good handling stability.

REFERENCE SIGNS LIST

1 pneumatic tire
2 chafer rubber
3 clinch rubber
4 sidewall rubber
5 carcass
51 carcass main body
52 carcass turn-up part
6 bead apex
7 bead core
8 outer apex
9 pneumatic tire
10 pneumatic tire

The present invention provides a pneumatic tire having improved durability while maintaining or improving good handling stability. The present invention relates to a pneumatic tire including an outer apex formed from a rubber composition, the rubber composition having a thermal conductivity of 0.60 W/m·K or higher.

## Claims

1. A pneumatic tire (1, 9, 10), comprising an outer apex (8) which is located axially outward of a bead apex (6) of the tire and axially outward of a carcass turn-up part (52) of the tire and which is formed from a rubber composition, the rubber composition having a thermal conductivity of 0.60 W/m·K or higher,
wherein the rubber composition comprises a pitch-based carbon fiber and/or graphite, **characterized in that**
at least 80% of the pitch-based carbon fiber and/or graphite in the outer apex is oriented at an angle of -15 to +15° to a tire width direction.

2. The pneumatic tire according to claim 1,
wherein the rubber composition comprises, per 100 parts by mass of a rubber component therein, 1 to 3 parts by mass of a crosslinkable resin and 0.1 to 0.3 parts by mass of a resin crosslinking-accelerating auxiliary.

3. The pneumatic tire according to claim 1 or 2,
wherein the rubber composition comprises, per 100 parts by mass of a rubber component therein, 3 to 55 parts by mass of a pitch-based carbon fiber.

4. The pneumatic tire according to any one of claims 1 to 3,
wherein the rubber composition comprises, per 100 parts by mass of a rubber component therein, 2 to 35 parts by mass of graphite.

5. The pneumatic tire according to any one of claims 1 to 4,
wherein the rubber composition comprises, per 100 parts by mass of a rubber component therein, 40 to 100 parts by mass of carbon black.

## Patentansprüche

1. Luftreifen (1, 9, 10), der einen äußeren Wulst (8) umfasst, welcher axial außerhalb einer Wulstspitze (6) des Reifens und axial außerhalb eines Karkassenumschlagteils (52) des Reifens angeordnet ist, und welcher aus einer Kautschukzusammensetzung gebildet wird, die Kautschukzusammensetzung weist eine thermische Leitfähigkeit von 0,60 W/m·K oder höher auf,

   wobei die Kautschukzusammensetzung eine Pech-basierte Kohlenstofffaser und/oder Graphit aufweist, **dadurch gekennzeichnet, dass**
   wenigstens 80% der Pech-basierten Kohlenstofffaser und/oder des Graphits in dem äußeren Wulst in einem Winkel von -15 bis +15° zu einer Reifenbreitenrichtung ausgerichtet ist.

2. Luftreifen nach Anspruch 1,
wobei die Kautschukzusammensetzung, pro 100 Massenteile des Kautschukbestandteils darin, 1 bis 3 Massenteile eines vernetzbaren Harzes und 0,1 bis 0,3 Massenteile eines Harzvernetzungsbeschleunigungshilfsmittels umfasst.

3. Luftreifen nach Anspruch 1 oder 2,
wobei die Kautschukzusammensetzung, pro 100 Massenteile des Kautschukbestandteils darin, 3 bis 55 Massenteile einer Pech-basierten Kohlenstofffaser umfasst.

4. Luftreifen nach einem der Ansprüche 1 bis 3,
wobei die Kautschukzusammensetzung, pro 100 Massenteile des Kautschukbestandteils darin, 2 bis 35 Massenteile Graphit umfasst.

5. Luftreifen nach einem der Ansprüche 1 bis 4,
wobei die Kautschukzusammensetzung, pro 100 Massenteile des Kautschukbestandteils darin, 40 bis 100 Massenteile Ruß umfasst.

## Revendications

1. Pneu (1, 9, 10) comprenant un apex extérieur (8) qui est situé axialement vers l'extérieur d'un apex de talon (6) du

pneu et axialement vers l'extérieur d'une partie de revers de carcasse (52) du pneu et qui est formé à partir d'une composition de caoutchouc, la composition de caoutchouc ayant une conductivité thermique de 0,60 W/m•K ou plus, dans lequel la composition de caoutchouc comprend une fibre de carbone à base de brai et/ou du graphite, **caractérisé en ce que**
au moins 80 % de la fibre de carbone à base de brai et/ou du graphite dans l'apex extérieur sont orientés selon un angle de -15 à +15° par rapport à la direction de la largeur du pneu.

2. Pneu selon la revendication 1, dans lequel la composition de caoutchouc comprend, pour 100 parties en masse d'un composant caoutchouc dans celle-ci, 1 à 3 parties en masse d'une résine réticulable et 0,1 à 0,3 partie en masse d'un auxiliaire d'accélération de réticulation de résine.

3. Pneu selon la revendication 1 ou 2, dans lequel la composition de caoutchouc comprend, pour 100 parties en masse d'un composant caoutchouc dans celle-ci, 3 à 55 parties en masse d'une fibre de carbone à base de brai.

4. Pneu selon l'une quelconque des revendications 1 à 3, dans lequel la composition de caoutchouc comprend, pour 100 parties en masse d'un composant caoutchouc dans celle-ci, 2 à 35 parties en masse de graphite.

5. Pneu selon l'une quelconque des revendications 1 à 4, dans lequel la composition de caoutchouc comprend, pour 100 parties en masse d'un composant caoutchouc dans celle-ci, 40 à 100 parties en masse de noir de carbone.

Fig. 1

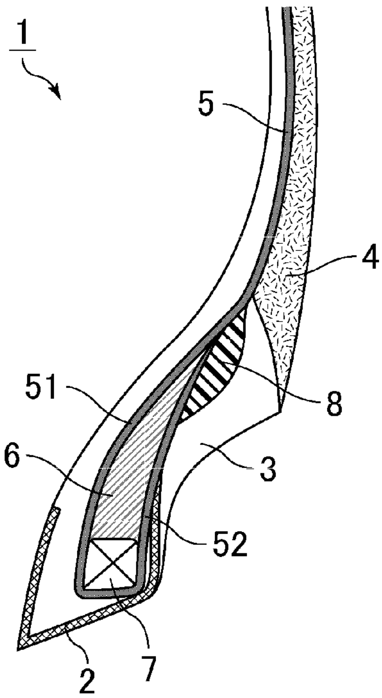


Fig. 2

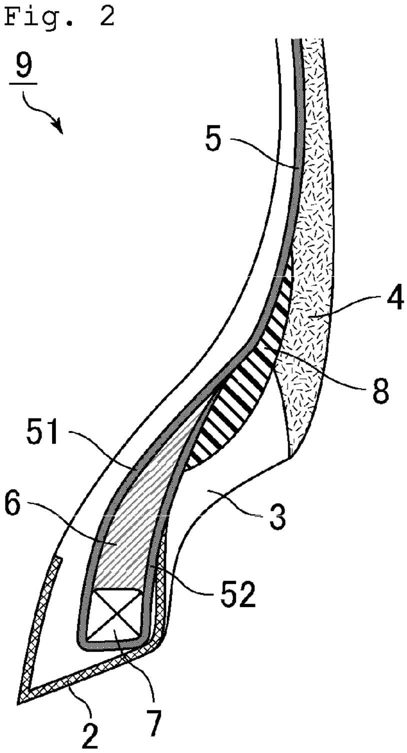

Fig. 3

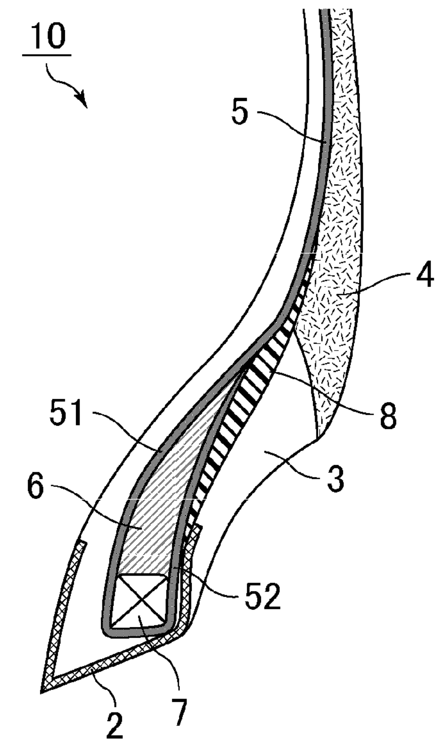

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012018106 A
- JP 2004203332 A
- JP 2011140548 A
- JP 2010285510 A
- CN 105694134 A
- JP 2010163560 A
- JP H7331536 A